# EUROPÄISCHE PATENTSCHRIFT

(11) **EP 1 305 974 B1**
(45) Veröffentlichungstag und Bekanntmachung des Hinweises auf die Patenterteilung: **18.04.2007**
(21) Anmeldenummer: 01969548.5
(22) Anmeldetag: 30.07.2001
(51) Int. Cl.: H04Q 7/38

(54) **VERFAHREN ZUR UNTERSCHEIDUNG VON LOGISCHEN KANÄLEN IN EINEM GEMEINSAM GENUTZTEN PHYSIKALISCHEN ÜBERTRAGUNGSKANAL EINES FUNK-KOMMUNIKATIONSSYSTEMS**
METHOD FOR DIFFERENTIATING LOGIC CHANNELS IN A COMMONLY USED PHYSICAL TRANSMISSION CHANNEL OF A RADIO COMMUNICATION SYSTEM
PROCEDE POUR LA DIFFERENCIATION DE VOIES LOGIQUES DANS UNE VOIE DE TRANSMISSION PHYSIQUE UTILISEE EN COMMUN D'UN SYSTEME DE COMMUNICATION RADIO

(30) Priorität: 01.08.2000 EP 00830552
(43) Veröffentlichungstag der Anmeldung: 02.05.2003
(73) Patentinhaber: SIEMENS AKTIENGESELLSCHAFT, 80333 München (DE); Siemens Mobile Communications S.p.A., 20126 Milano (IT)
(72) Erfinder: GESSNER, Christina, 81373 München (DE); HÖYNCK, Andreas, 16540 Hohen Neuendorf (DE); SCHNIEDENHARN, Jörg, 13587 Berlin (DE); DEINZER, Arnulf, 81476 München (DE); HILLENBRAND, Gerd, 80636 München (DE); DEBENEDITTIS, Rossella, I-20137 Milano (IT)
(74) Vertreter: Berg, Peter
(86) Internationale Anmeldenummer: PCT/EP2001/008799
(87) Internationale Veröffentlichungsnummer: WO 2002/011486

(56) Entgegenhaltungen:
- US-A- 5 903 552
- "Universal Mobile Telecommunications System (UMTS); Physical channels and mapping of transport channels onto physical channels (TDD)" EUROPEAN TELECOMMUNICATIONS STANDARDS INSTITUTE, (ETSI)., Juni 2000 (2000-06), Seiten 1-47, XP002158001 Sophia Antipolis-FRANCE
- OVESJO F AND AL: "FRAMES MULTIPLE ACCESS MODE 2-WIDEBAND CDMA" IEEE INTERNATIONAL SYMPOSIUM ON PERSONAL, INDOOR AND MOBILE RADIO COMMUNICATIONS,XX,XX, Bd. 1, 1. September 1997 (1997-09-01), Seiten 42-46, XP002085886
- MOHR W: "UTRA FDD and TDD, a harmonized proposal for IMT-2000" PROCEEDINGS OF THE INTERNATIONAL CONFERENCE ON COMMUNICATION TECHNOLOGY, 22. Oktober 1998 (1998-10-22), XP002111409

## Beschreibung

Die Erfindung betrifft ein Verfahren zur Unterscheidung von logischen Kanälen in einem gemeinsam genutzten physikalischen Übertragungskanal eines Funk-Kommunikationssystems.

In Funk-Kommunikationssystemen, beispielsweise dem europäischen Mobilfunksystem der zweiten Generation GSM (Global System for Mobile Communications), werden Informationen (beispielsweise Sprache, Bildinformation oder andere Daten) mit Hilfe von elektromagnetischen Wellen über eine Funkschnittstelle übertragen. Die Funkschnittstelle bezieht sich auf eine Verbindung zwischen einer Basisstation und Teilnehmerstationen, wobei die Teilnehmerstationen beispielsweise Mobilstationen oder ortsfeste Funkstationen sein können. Das Abstrahlen der elektromagnetischen Wellen erfolgt dabei mit Trägerfrequenzen, die in einem für das jeweilige System vorgesehenen Frequenzband liegen. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen. Für die dritte Mobilfunkgeneration sind zwei Modi vorgesehen, wobei ein Modus einen FDD-Betrieb (frequency division duplex) und der andere Modus einen TDD-Betrieb (time division duplex) bezeichnet. Diese Modi finden in jeweils unterschiedlichen Frequenzbändern ihre Anwendung. Beide Modi unterstützen ein sogenanntes CDMA-Teilnehmerseparierungsverfahren (Code Division Multiple Access).

Ein Vorschlag für ein Mobilfunksystem der dritten Generation nach "TD-SCDMA Radio Transmission Technology for IMT-2000", Draft V.0.4, der CATT vom September 1998, basiert auf dem beschriebenen TDD-Modus mit einer Unterstützung eines CDMA-Teilnehmerseparierungsverfahrens. Durch die Verwendung des CDMA-Teilnehmerseparierungsverfahrens können von mehreren Teilnehmerstationen in einem Zeitschlitz gesendete Übertragungsblöcke, die im allgemeinen aus einem Datenteil und einer bekannten Trainingssequenz bestehen, von einer Basisstation parallel verarbeitet werden. Hierzu muß sichergestellt werden, daß die Übertragungsblöcke und insbesondere die jeweiligen Trainingssequenzen innerhalb eines bestimmten Zeitfensters am Ort der Basisstation eintreffen, um eine gesicherte Detektion und Trennung der unterschiedlichen Signale zu gewährleisten. Dieses Problem der Synchronisation der Signalübertragung in Aufwärtsrichtung tritt bei bekannten CDMAbasierten Funk-Kommunikationssystemen in gleicher Weise auf. Dieses System soll in einem ersten Schritt auf der Netzwerkstruktur des bekannten GSM-Mobilfunksystems aufbauen, d.h. die gleichen Netzwerkkomponenten nutzen. Aus diesem Grund wird dieses System auch als TDSCDMA @ GSM bezeichnet.

Parallel zu dem beschriebenen TDSCDMA @ GSM-System wird im Rahmen des 3GPP (Third Generation Partnership Project) eine sogenannte "Low-Chiprate-Option" für den UMTS-TDD-Modus standardisiert, die eine verringerte Chiprate von 1,28 Mcps aufweist. Die Funkschnittstelle, d.h. die Schicht 1, dieses Systems wird mit der des TDSCDMA @ GSM-System weitgehend identisch sein, jedoch auf der UTRAN-Netzwerkstruktur (Universal Terrestrial Radio Access Network) aufbauen. Dieses System wird daher als TDSCDMA @ UTRAN bezeichnet. Eine Beschreibung des Systems ist aus 3GPP "1,28Mcps functionality for UTRA TDD Physical Layer", 3G TR 25.928, V1.1.0, 2000-07, TSG, RAN, entnehmbar.

Das beschriebene TDSCDMA @ GSM-System sowie das TDSCDMA @ UTRAN-System weisen gemeinsam genutzte physikalische Übertragungskanäle, sogenannte P-CCPCH (Primary Common Control Physical Channel) auf, in denen beispielsweise sowohl ein allgemeiner Signalisierungskanal BCH (Broadcast Channel) mit Organisationsinformationen als auch ein sogenannter Pagingkanal PCH (Paging Channel) zeitlich getrennt als logische Kanäle ausgesendet werden. Innerhalb der in Zeitrahmen (frames) und übergeordneten sogenannten Superrahmen strukturierten Funkschnittstelle werden die logischen Kanäle zusätzlich über eine bestimmte Anzahl von Zeitrahmen verschachtelt (interleaved). Im folgenden wird für die Anzahl verschachtelter Zeitrahmen für einen logischen Kanal auch der Begriff Verschachtelungsrahmen verwendet. Für den BCH und den PCH entspricht die Verschachtelungstiefe beispielsweise vier Zeitrahmen.

In einer ersten Phase des Systemaufbaus werden voraussichtlich TDSCDMA @ GSM-Systeme zum Einsatz kommen, die später durch TDSCDMA @ UTRAN-Systeme ergänzt oder ersetzt werden. Für eine bestimmte Übergangszeit ist demnach auch eine Koexistenz beider Systeme in einem gemeinsamen Frequenzband möglich. Aus diesem Grund sollte ein Teilnehmerendgerät, daß technisch für das TDSCDMA @ GSM-System ausgelegt ist, auch in einem TDSCDMA @ UTRAN-System genutzt werden können.

Der beschriebene BCH als Träger von Systeminformationen ist einer der wichtigsten gemeinsamen Kanäle (sog. Common Control Channel), und der Empfang von richtigen Information besitzt für die Teilnehmerstation eine hohe Bedeutung, da sie hieraus Informationen über weitere Kontrollkanäle erhält. Die BCH der beiden TDSCDMA-Systeme besitzen jedoch netzwerkbedingte große Unterschiede in den Systemnachrichten und der Kodierung der Informationen. Dabei ist das TDSCDMA @ UTRAN-System sehr stark an den weiteren UTRAN-Modi FDD und TDD angelehnt. Andererseits sollten bereits etablierte und von dem TDSCDMA @ GSM-System genutzte Signalisierungslösungen bestehen bleiben.

Eine Lösung dieses Problems wäre beispielsweise eine Nutzung einer größeren Anzahl von physikalischen Kanälen, die von den unterschiedlichen Systemen genutzt werden. Eine parallele Übertragung dieser Kanäle würde jedoch aufgrund der Tatsache, daß der BCH mit einer vergleichsweise hohen Sendeleistung ausgestrahlt wird, zu einer starken Interferenzbeeinflussung des jeweils anderen BCH und von parallel aufgebauten Kommunikationsverbindungen führen.

Aufgabe der Erfindung ist es, ein Verfahren anzugeben, das eine effektive Nutzung von Ubertragungsressourcen zur Signalisierung ermöglicht. Diese Aufgabe wird durch das Verfahren, durch das Basisstationssystem, und der Teilnehmerstation gemäß den unabhängigen Patentansprüchen gelöst. Vorteilhafte Weiterbildungen der Erfindung sind den abhängigen Ansprüchen zu entnehmen.

Die Erfindung kann über den beschriebenen Stand der Technik der TDSCDMA-Systeme auch für ein auf einem weiteren Netzwerkstandard basierendes TDSCDMA-System, beispielsweise das japanische PDC- oder das US-amerikanische IS-95- oder TDMA-System vorteilhaft eingesetzt werden.

Ausführungsbeispiele der Erfindung werden anhand der beiliegenden Zeichnungen näher erläutert.

Dabei zeigen
- FIG 1: ein Blockschaltbild eines Funk-Kommunikationssystems.
- FIG 2: eine schematische Darstellung der Rahmenstruktur einer Funkschnittstelle mit einem TDSCDMA-Teilnehmerseparierungsverfahren, und
- FIG 3: einen Ausschnitt der Rahmenstruktur aus FIG 3.

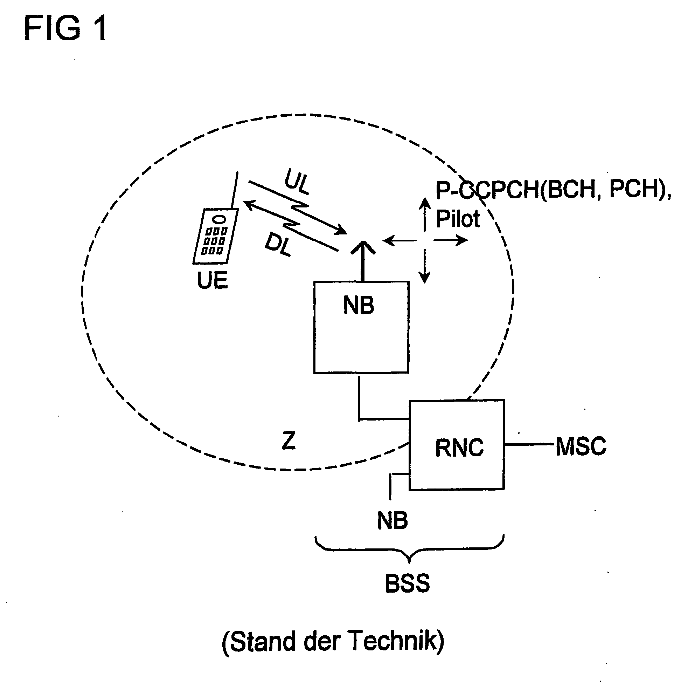

Die FIG 1 zeigt einen Teil eines Mobilfunksystems als Beispiel für die Struktur eines Funk-Kommunikationssystems. Ein Mobilfunksystem besteht jeweils aus einer Vielzahl von Mobilvermittlungsstellen MSC, die zu einem Vermittlungsnetz (SSS - Switching Subsystem) gehören und untereinander vernetzt sind bzw. den Zugang zu einem Festnetz herstellen, und aus jeweils einem oder mehreren mit diesen Mobilvermittlungsstellen MSC verbundenen Basisstationssystemen BSS (BSS - Base Station Subsystem). Ein Basisstationssystem BSS weist wiederum zumindest eine Einrichtung RNC (RNC - Radio Network Controller) zum Zuweisen von funktechnischen Ressourcen sowie zumindest eine jeweils damit verbundene Basisstation NB (NB - Node B) auf.

Eine Basisstation NB kann über eine Funkschnittstelle Verbindungen zu Teilnehmerstationen UE (UE - User Equipment) aufbauen und unterhalten. Durch jede Basisstation NB wird zumindest eine Funkzelle Z gebildet. Die Größe der Funkzelle Z wird in der Regel durch die Reichweite eines allgemeinen Signalisierungskanals (BCH - Broadcast Channel), der von den Basisstationen NB mit einer jeweils erhöhten und konstanten Sendeleistung gesendet wird, bestimmt. Weitere logische Signalisierungskanäle, wie beispielsweise ein Paging-Kanal (PCH - Paging Channel), ein Notifikations-Kanal (NCH - Notification Channel) oder ein Zugriffsbestätigungs-Kanal (AGCH - Access Grant Channel) können gemeinsam mit dem Signalisierungskanal BCH zeitlich getrennt in einem physikalischen Übertragungskanal P-CCPCH gesendet werden. Weiterhin werden von der Basisstation NB in einem Pilotkanal Pilot Synchronisationssequenzen gesendet, die einer Synchronisation der Teilnehmerstation UE auf die Zeitbasis der Basisstation NB dienen.

Bei einer Sektorisierung oder bei hierarchischen Zellstrukturen können pro Basisstation NB auch mehrere Funkzellen Z versorgt werden. Die Funktionalität dieser Struktur ist auf andere Funk-Kommunikationssysteme übertragbar, in denen die Erfindung zum Einsatz kommen kann.

Das Beispiel der FIG 1 zeigt eine Teilnehmerstation UE, die sich in der Funkzelle Z einer Basisstation NB befinden. Die Teilnehmerstation UE hat eine Kommunikationsverbindung zu der Basisstation NB aufgebaut, auf der in Aufwärts- UL und Abwärtsrichtung DL eine Signalübertragung eines gewählten Dienstes erfolgt. Die Kommunikationsverbindung wird durch einen oder mehrere der Teilnehmerstation UE zugeteilte Spreizkodes von parallel in der Funkzelle Z aufgebauten Kommunikationsverbindungen separiert, wobei die Teilnehmerstation UE jeweils einen Teil oder alle aktuell in der Funkzelle Z zugeteilten Spreizkodes für den Empfang der Signale der eigenen Kommunikationsverbindung gemäß dem bekannten Joint-Detection-Verfahren nutzt.

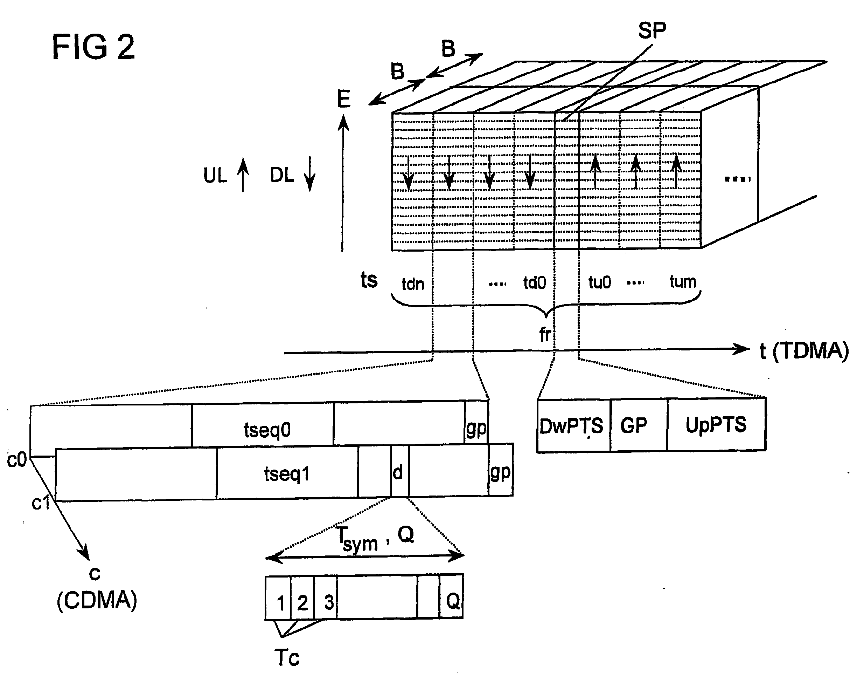

Die Rahmenstruktur der Funkübertragung des TDSCDMA-Mobilfunksystems ist aus der FIG 2 ersichtlich. Die Funkschnittstelle ist als eine breitbandige Funkschnittstelle mit einem Frequenzband B = 1,6 MHz (somit drei Frequenzbänder pro 5 MHz), mit einer Zeitrahmendauer von 5 ms (somit zwei Zeitrahmen fr pro UTRA-Zeitrahmen), mit 7 Zeitschlitzen ts einer jeweiligen Länge von 675 us für Verkehrskanäle, sowie mit CDMA-Teilnehmerseparierung unter Nutzung von 16 unterschiedlichen Spreizkodes c0 bis c15 ausgebildet.

Bei dem dargestellten TDD-Übertragungsverfahren entspricht das Frequenzband B für die Aufwärtsrichtung UL dem Frequenzband B für die Abwärtsrichtung DL. Gleiches wiederholt sich für weitere Trägerfrequenzen. Durch die variable Zuordnung der Zeitschlitze ts für die Auf- oder Abwärtsrichtung UL, DL können vielfältige asymmetrische Ressourcenzuteilungen vorgenommen werden. Ein Teil der Zeitschlitze td0...tdn wird entsprechend für die Signalübertragung in Abwärtsrichtung DL (Downlink) und die übrigen Zeitschlitze tu0...tum für die Signalübertragung in Aufwärtsrichtung UL (Uplink) genutzt. Die Parameter n, m und somit der Umschaltpunkt SP (Switching Point) sind individuell an einen aktuellen Bedarf adaptierbar, wobei jeweils die Beziehung n+m+2=7 gilt. Im zeitlichen Anschluß an den ersten Zeitschlitz td0 für die Abwärtsrichtung DL folgt eine Schutzzeit zur Separierung der Übertragungsrichtungen DL und UL, die den Umschaltpunkt SP darstellt.

Die Schutzzeit besteht aus einem Abwärts-Pilotzeitschlitz DwPTS (Downlink Pilot Time Slot) mit einer Länge von 75 us zum Senden von durch einen Satz sogenannter Gold-Codes unterschiedener Synchronisationssequenzen, aus einer Schutzzeit GP (Guard Period) mit einer Länge von 75 us für den Umschaltvorgang zwischen Senden und Empfangen in der Basisstation NB, sowie aus einem Aufwärts-Pilotzeitschlitz UpPTS (Uplink Pilot Time Slot) mit einer Länge von 125 us zum Senden einer Synchronisationssequenz bei einem Verbindungsaufbauversuch durch eine Teilnehmerstation UE mit einer anschließenden Signalisierung auf dem Kanal zum wahlfreien Zugriff RACH. Zur Unterscheidung mehrerer Teilnehmerstationen UE bei dieser Zugriffsprozedur wird wiederum ein Satz Gold-Codes verwendet.

Innerhalb der Zeitschlitze ts werden Informationen mehrerer Verbindungen in Funkblöcken übertragen. Die Daten d sind verbindungsindividuell mit einer Feinstruktur, einem Spreizkode c0, c1.....cn gespreizt, so daß empfangsseitig beispielsweise n Verbindungen durch diese CDMA-Komponente separierbar sind. Die Spreizung von einzelnen Symbolen der Daten d bewirkt, daß innerhalb der Symboldauer T_{sym} Q Chips der Dauer Tc übertragen werden. Die Q Chips bilden dabei den verbindungsindividuellen Spreizkode c. In den Funkblöcken ist weiterhin eine Kanalmeßsequenz tseq für eine empfangsseitige Kanalschätzung eingebettet. Ein Funkblock wird jeweils mit einer Schutzzeit gp abgeschlossen.

Die verwendeten Parameter der Funkschnittstelle für das beschriebene TD-SCDMA-System sind vorteilhafterweise:

| | |
|---|---|
| Chiprate: | 1,28 Mchip/s |
| Rahmendauer: | 5 ms |
| Anzahl Zeitschlitze: | 7 |
| Dauer eines Zeitschlitzes: | 675 µs |
| Spreizfaktor: | 1 bis 16 |
| Bandbreite: | 1,6 MHz |

Diese Parameter ermöglichen eine bestmögliche Harmonisierung mit dem UTRA·TDD- und FDD-Modus (FDD frequency division duplex) sowie dem bekannten GSM-Mobilfunksystem.

Ist eine die logischen Kanäle empfangende Teilnehmerstation UE nicht in Kenntnis, welcher Zeitrahmen des verschachtelten logischen Kanals sie gerade empfängt, so ergeben sich daraus folgende Nachteile. Zum einen muß die Teilnehmerstation eine sogenannte Try and Error-Technik zur Bestimmung des Beginns eines Verschachtelungsrahmens anwenden. Schlägt dabei bei der Demodulation der sogenannte CRC-Check fehl, so muß die Teilnehmerstation von einem weiteren Beginn eines Verschachtelungsrahmens oder von einem schlecht empfangenen Beginn eines Verschachtelungsrahmens ausgehen. Dieses reduziert nachteilig die Verläßlichkeit und die Geschwindigkeit der Detektion des logischen Kanals. Weiterhin muß die Teilnehmerstation oftmals Zeitrahmen detektieren, die zu einem nicht vollständigen Verschachtelungsrahmen gehören, und diese anschließend wieder verwerfen. Dieses erhöht nachteilig den Energiekonsum sowie die Zeit bis zum Empfang eines vollständigen Verschachtelungsrahmens.

Um die beschriebenen Nachteile zu umgehen, sind die folgenden Punkte aus der Sicht der Teilnehmerstation wünschenswert:
- die Teilnehmerstation kann den Beginn eines Verschachtelungsrahmens detektieren,
- die Teilnehmerstation kann die Position des aktuell empfangenen Zeitrahmens innerhalb eines Verschachtelungsrahmens ermitteln, und
- die Teilnehmerstation kann die Position des Verschachtelungsrahmens innerhalb eines Superrahmens detektieren.

Bei dem zweiten Punkt könnte die Teilnehmerstation bei einer beispielhaften Detektion eines zweiten Zeitrahmens von einer weiteren Detektion der noch fehlenden Zeitrahmen absehen.

Bei dem dritten Punkt könnte die Teilnehmerstation beispielsweise gezielt einen bestimmten logischen Kanal detektieren. In dem beschriebenen TDSCDMA-System besteht ein Superrahmen aus 48 Zeitrahmen. Innerhalb dieses Superrahmens sind beispielsweise zwei Verschachtelungsrahmen mit jeweils vier Zeitrahmen des BCHs angeordnet. Für den Fall, daß die Teilnehmerstation nur den BCH detektieren möchte, kann sie gezielt die Detektion der in den weiteren Zeitrahmen gesendeten PCHs unterdrücken.

Es wird daher vorgeschlagen, den Beginn eines Zeitrahmens innerhalb eines Verschachtelungsrahmens, die Position eines Zeitrahmens innerhalb eines Verschachtelungsrahmens und/oder die Position des Verschachtelungsrahmens innerhalb eines Superrahmens basierend auf einer Modulation der Phase des Pilotkanals Pilot in dem Abwärts-Pilotzeitschlitz DwPTS zu signalisieren. Hierzu wird als Referenzwert zur Bestimmung der Phasendifferenz erfindungsgemäß beispielsweise die Mittambel, auch als Trainingssequenz tseq bezeichnet, des gemeinsam genutzten physikalischen Übertragungskanals P-CCPCH genutzt.

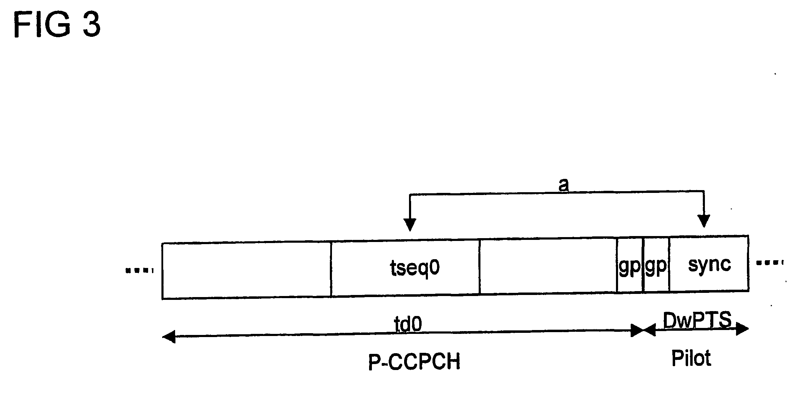

Diesen Kanal als Referenzwert zu nutzen besitzt den Vorteil, daß er in jedem Zeitrahmen fr beispielsweise mit den Spreizkodes c0 und c1 gesendet wird, und die Mittambel immer der ersten Ableitung des in der Funkzelle genutzten Mittambelgrundkodes entspricht. Dieses ist der Teilnehmerstation UE per se bekannt. Weiterhin wird, wie in den Figuren 2 und 3 dargestellt, der P-CCPCH immer in dem letzten Zeitschlitz td0 für die Abwärtsrichtung DL gesendet, so daß eine minimale Distanz a zwischen der Mitte der Mittambel tseq0 und der Mitte der Synchronisationssequenz sync des Pilotkanals Pilot gegeben ist. Die Distanz a zwischen der Mittambel tseq0 und der Synchronisationssequenz sync beträgt bei dem TD-SCDMA-System beispielsweise 393,75 us bzw. 31,5 Symbole, und bestimmt die Effekte der Zeitvariation und Frequenzoffset auf den verwendeten Detektions-Algorithmus.

Sowohl der Beginn eines Verschachtelungsrahmens als auch dessen Position innerhalb eines Superrahmens kann direkt signalisiert werden. So ist beispielsweise die Phase 45° zur Kennzeichnung des Beginns eines Verschachtelungsrahmens reserviert. Für die weiteren Zeitrahmen des Verschachtelungsrahmens wird die jeweilige Phase 135°, 225° und 315° nur zur Bestimmung der Position innerhalb des Superrahmens verwendet. Zur Vermeidung von Detektionsfehlern zwischen 45°-Symbolen und den weiteren Symbolen weisen die weiteren Phasenquadrupeln soviele 225°-Symbole wie möglich auf. Durch die 180° Phasendifferenz ergibt sich hieraus eine eindeutige Zuordnung. Je näher ein BCH-Verschachtelungsrahmen gelegen ist, umso mehr 225°-Symbole werden genutzt. Dieses Beziehungen, wie sie für das TDSCDMA @ GSM-System genutzt werden sollen, sind in der nachfolgenden Tabelle 1 dargestellt.

Zur Bestimmung der Position des für das TDSCDMA @ GSM-System relevanten BCH innerhalb des Superrahmens wertet die Teilnehmerstation UE die vier Phasen (Phasen-Quadrupel) eines Verschachtelungsrahmens aus.

**Tabelle 1**

| Phasenquadrupel | Anzahl 225° | Verschachtelungsrahmennummer |
|---|---|---|
| 45, 225, 225, 225 | 3 | 1 (BCH) |
| 45, 135, 135, 225 | 1 | 2 |
| 45, 135, 225, 315 | 1 | 3 |
| 45, 315, 225, 315 | 1 | 4 |
| 45, 225, 135, 315 | 1 | 5 |
| 45, 225, 315, 315 | 1 | 6 |
| 45, 225, 225, 135 | 2 | 7 |
| 45, 225, 225, 315 | 2 | 8 |
| 45, 135, 225, 225 | 2 | 9 |
| 45, 315, 225, 225 | 2 | 10 |
| 45, 225, 135, 225 | 2 | 11 |
| 45, 225, 315, 225 | 2 | 12 |
| andere | - | fehler |

Die minimale Anzahl zu detektierender Zeitrahmen zur Ermittlung der Position innerhalb eines Verschachtelungsrahmens beträgt bei dieser Ausführung 1 bis 3. Die minimale Anzahl zu detektierender Zeitrahmens zur Ermittlung des BCH und des Superrahmens beträgt 3 bis 4.

Vorteilhaft wird durch dieses Verfahren neben den bereits geannten Vorteilen der vorhergehenden Verfahren der Beginn eines Verschachtelungsrahmens vorteilhaft direkt kodiert. Weiterhin wird die zeitliche Struktur des Superrahmens in nur vier Zeitrahmen signalisiert. Die Ordnung sowie das verwendete Phasenquadrupel kann in der Weise optimiert werden, daß eine Differenzdekodierung von vier oder fünf sukzessiven DwPTS auch eine Detektion der Position innerhalb des Superrahmens bei großen Frequenz-Offsets ermöglicht. Bei einer Detektion unter schlechten Übertragungsbedingungen ermöglicht diese Ausführung eine sichere Detektion des Superrahmens.

Für das TDSCDMA @ UTRAN-System ist dahingegen vorgesehen, daß die Systemrahmennummer SFN (System Frame Number) in entsprechender Weise von der Teilnehmerstation UE ermittelt werden kann. Dieses ist in der Tabelle 2 dargestellt.

**Tabelle 2**

| Phasenquadrupel | Anzahl 225° | (SFN/2) mod 8 |
|---|---|---|
| 45, 225, 225, 225 | 3 | 0 (BCH) |
| 45, 135, 135, 225 | 1 | 1 |
| 45, 135, 225, 315 | 1 | 2 |
| 45, 315, 225, 315 | 1 | 3 |
| 45, 225, 135, 315 | 1 | 4 |
| 45, 225, 315, 315 | 1 | 5 |
| 45, 225, 225, 135 | 2 | 6 |
| 45, 225, 225, 315 | 2 | 7 |
| andere | - | fehler |

Ein Vergleich der Tabellen 1 und 2 verdeutlicht, daß seitens der Teilnehmerstation UE keine Unterscheidung der BCH der beiden TDSCDMA-Systeme möglich ist und es daher nachteilig zu Fehlinterpretationen kommen kann.

In der nachfolgenden Tabelle 3 ist beispielhaft dargestellt, wie die dieses Problem erfindungsgemäß gelöst wird.

**Tabelle 3**

| Phasenquadrupel | Anzahl 225° | (SFN/2) mod 8 |
|---|---|---|
| 45, 135, 135, 225 | 1 | 0 (BCH TDSCDMA @ UTRAN) |
| 45, 135, 225, 315 | 1 | 1 (BCH TDSCDMA @ UTRAN) |
| 45, 315, 225, 315 | 1 | 2 (BCH TDSCDMA @ UTRAN) |
| 45, 225, 135, 315 | 1 | 3 (BCH TDSCDMA @ UTRAN) |
| 45, 225, 315, 315 | 1 | 4 (BCH TDSCDMA @ UTRAN) |
| 45, 225, 225, 135 | 2 | 5 (BCH TDSCDMA @ UTRAN) |
| 45, 225, 225, 315 | 2 | 6 (BCH TDSCDMA @ UTRAN) |
| 45, 225, 225, 225 | 3 | 7 (BCH TDSCDMA @ GSM) |
| andere | - | fehler |

Aufgrund der Tatsache, daß der BCH des TDSCDMA @ GSM-System eine deutlich niedrigere Signalisierungslast aufweist, ist eine seltenere Aussendung unter Nutzung von einer geringeren Anzahl von Übertragungsressourcen ausreichend. Dem BCH des TDSCDMA @ GSM-Systems ist ein bestimmtes mögliches Phasenquadrupel, beispielsweise 45, 225, 225, 255, exklusiv zugeordnet, so daß eine TDSCDMA @ GSM-Teilnehmerstation UE diesen logischen Kanal sicher detektieren kann. Einer TDSCDMA @ UTRAN-Teilnehmerstation UE kann dieses bekannt sein, jedoch ist auch bei einer Unkenntnis dieser Tatsache nur eine geringe Beeinträchtigung bei der Detektion des für sie relevanten BCH gegeben. Die hierdurch entstehende Multirahmenstruktur ist beispielhaft in der nachfolgenden Tabelle 4 dargestellt. Sollten nach einer gewissen Zeit keine TDSCDMA @ GSMsystemkonformen Teilnehmerstationen mehr das System nutzen, so kann der Zeitrahmen auch für das TDSCDMA @ UTRAN-System genutzt werden.

**Tabelle 4**

| SFN | SIB |
|---|---|
| 0 | (BCH TDSCDMA @ UTRAN) |
| 2 | (BCH TDSCDMA @ GSM) |
| 4 | (BCH TDSCDMA @ UTRAN) |
| 6 | (BCH TDSCDMA @ UTRAN) |
| 8 | (BCH TDSCDMA @ UTRAN) |
| 10 | (BCH TDSCDMA @ UTRAN) |
| 12 | (BCH TDSCDMA @ UTRAN) |
| 14 | (BCH TDSCDMA @ UTRAN) |
| 16 | (BCH TDSCDMA @ UTRAN) |
| 18 | (BCH TDSCDMA @ GSM) |
| 20 | (BCH TDSCDMA @ UTRAN) |
| 22 | (BCH TDSCDMA @ UTRAN) |

Der erste Zeitrahmen gemäß Tabelle 3, mit den Phasenquadrupeln 45, 135, 135, 225, kann in dem TDSCDMA @ UTRAN-System beispielsweise zur Übertragung eines sogenannten MIB (Master Information Block), der Zeitstrukturinformationen bezüglich sogenannter SIB (System Information Blocks) enthält, verwendet werden.

## Patentansprüche

1. Verfahren zur Unterscheidung von logischen Kanälen (BCH) in einem von zumindest zwei Funk-Kommunikationssystemen gemeinsam genutzten physikalischen Übertragungskanal (P-CCPCH), wobei
der jeweilige logische Kanal (BCH) mittels einer individuellen Phasenbeziehung zwischen dem logischen Kanal (BCH) und einem weiteren Übertragungskanal (Pilot) unterscheidbar ist.

2. Verfahren nach Anspruch 1, bei dem
eine Phasendifferenz zwischen Symbolen des logischen Kanals (BCH) und Symbolen des weiteren Übertragungskanals (Pilot) den logischen Kanal (BCH) signalisiert.

3. Verfahren nach einem vorhergehenden Anspruch, bei dem
durch eine Phasenmodulation der Symbole des weiteren Übertragungskanals (Pilot) der logische Kanal (BCH) signalisiert wird.

4. Verfahren nach dem vorhergehenden Anspruch, wobei dem
die Phase des logischen Kanals (BCH) als Referenz zur Bestimmung der Phasendifferenz dient.

5. Verfahren nach einem vorhergehenden Anspruch, bei dem
der logische Kanal (BCH) verschachtelt über mehrere Zeitrahmen (fr) innerhalb des gemeinsam genutzten physikalischen Übertragungskanals (P-CCPCH) übertragen wird.

6. Verfahren nach einem vorhergehenden Anspruch, bei dem
in dem gemeinsam genutzten physikalischen Übertragungskanal (P-CCPCH) zumindest ein weiterer logischer Kanal (PCH) übertragen wird.

7. Verfahren nach einem vorhergehenden Anspruch, bei dem
der logische Kanal (BCH) in einer Anzahl von Zeitrahmen (fr) innerhalb eines aus mehreren Zeitrahmen (fr) bestehenden Superrahmens ausgesendet wird.

8. Verfahren nach dem vorhergehenden Anspruch, bei dem
durch die Phasenbeziehung eine Position des jeweiligen Zeitrahmens (fr) innerhalb der verschachtelten Zeitrahmen (fr) für den logischen Kanal (BCH) definiert wird.

9. Verfahren nach einem der Ansprüche 1 bis 7, bei dem
durch die Phasenbeziehung eine Position des Beginns der verschachtelten Zeitrahmen (fr) innerhalb eines Superrahmens signalisiert wird.

10. Verfahren nach dem vorhergehenden Anspruch, bei dem
die Position des jeweiligen Zeitrahmens (fr) innerhalb der verschachtelten Zeitrahmen (fr) für den logischen Kanal (BCH) durch eine differenzielle Phasenbeziehung definiert wird.

11. Verfahren nach einem der Ansprüche 1 bis 7, bei dem
die Position des jeweiligen Zeitrahmens (fr) innerhalb der verschachtelten Zeitrahmen (fr) für den logischen Kanal (BCH) und die Position des Beginns der verschachtelten Zeitrahmen (fr) innerhalb eines Superrahmens durch eine jeweilige Konstellation mehrerer Phasenbeziehungen definiert wird.

12. Verfahren nach einem vorhergehenden Anspruch, wobei
die Funkschnittstelle des Funk-Kommunikationssystems gemäß einem Zeitduplexverfahren organisiert ist.

13. Basisstationssystem (BSS) eines Funk-Kommunikationssystems, aufweisend Mittel zum Aussenden von logischen Kanälen (BCH) in einem von zumindest zwei Funk-Kommunikationssystemen gemeinsam genutzten physikalischen Übertragungskanal (P-CCPCH), wobei der jeweilige logische Kanal (BCH) mittels einer individuellen Phasenbeziehung zwischen dem logischen Kanal (BCH) und einem weiteren Übertragungskanal (Pilot) unterscheidbar ist.

14. Teilnehmerstation (UE) eines Funk-Kommunikationssystems, aufweisend Mittel zum Empfangen von logischen Kanälen (BCH) in einem von zumindest zwei Funk-Kommunikationssystemen gemeinsam genutzten physikalischen Übertragungskanal (P-CCPCH), wobei der jeweilige logische Kanal (BCH) mittels einer individuellen Phasenbeziehung zwischen dem logischen Kanal (BCH) und einem weiteren Übertragungskanal (Pilot) unterscheidbar ist.

## Claims

1. Method for differentiating logical channels (BCH) in a physical transmission channel (P-CCPCH) shared by at least two radio communication systems, wherein
the individual logical channel (BCH) can be distinguished by means of a unique phase relationship between the logical channel (BCH) and a further transmission channel (Pilot).

2. Method according to claim 1, wherein
a phase difference between symbols of the logical channel (BCH) and symbols of the further transmission channel (Pilot) signals the logical channel (BCH).

3. Method according to a preceding claim, wherein the logical channel (BCH) is signalled by means of a phase modulation of the symbols of the further transmission channel (Pilot).

4. Method according to the preceding claim, wherein the phase of the logical channel (BCH) serves as a reference for determining the phase difference.

5. Method according to a preceding claim, wherein the logical channel (BCH) is transmitted interleaved over a plurality of time frames (fr) within the shared physical transmission channel (P-CCPCH).

6. Method according to a preceding claim, wherein at least one further logical channel (PCH) is transmitted in the shared physical transmission channel (P-CCPCH).

7. Method according to a preceding claim, wherein the logical channel (BCH) is transmitted in a number of time frames (fr) within a superframe consisting of a plurality of time frames (fr).

8. Method according to the preceding claim, wherein a position of the respective time frame (fr) within the interleaved time frames (fr) for the logical channel (BCH) is defined by means of the phase relationship.

9. Method according to one of claims 1 to 7, wherein a position of the start of the interleaved time frames (fr) within a superframe is signalled by means of the phase relationship.

10. Method according to the preceding claim, wherein the position of the respective time frame (fr) within the interleaved time frames (fr) for the logical channel (BCH) is defined by means of a differential phase relationship.

11. Method according to one of claims 1 to 7, wherein the position of the respective time frame (fr) within the interleaved time frames (fr) for the logical channel (BCH) and the position of the start of the interleaved time frames (fr) within a superframe are defined by means of a particular constellation of multiple phase relationships.

12. Method according to a preceding claim, wherein the radio interface of the radio communication system is organised in accordance with a time division duplex method.

13. Base station system (BSS) of a radio communication system, comprising means for transmitting logical channels (BCH) in a physical transmission channel (P-CCPCH) shared by at least two radio communication systems, wherein the individual logical channel (BCH) can be distinguished by means of a unique phase relationship between the logical channel (BCH) and a further transmission channel (Pilot).

14. Subscriber station (UE) of a radio communication system having means for receiving logical channels (BCH) in a physical transmission channel (P-CCPCH) shared by at least two radio communication systems, wherein the individual logical channel (BCH) can be distinguished by means of a unique phase relationship between the logical channel (BCH) and a further transmission channel (Pilot).

## Revendications

1. Procédé pour la différenciation de voies logiques (BCH) dans une voie de transmission (P-CCPCH), physique, utilisée conjointement par au moins deux systèmes de radiocommunication,
la voie logique (BCH) concernée pouvant être différenciée au moyen d'une relation de phases individuelle entre la voie logique (BCH) et une autre voie de transmission (pilote).

2. Procédé selon la revendication 1, dans lequel une différence de phase entre les symboles de la voie logique (BCH) et des symboles de l'autre voie de transmission (pilote) signale la voie logique (BCH).

3. Procédé selon une revendication précédente, dans lequel la voie logique (BCH) est signalée par une modulation de phase des symboles de l'autre voie de transmission (pilote).

4. Procédé selon la revendication précédente, la phase de la voie logique (BCH) servant de référence pour la détermination de la différence de phase.

5. Procédé selon une revendication précédente, dans lequel la voie logique (BCH) est transmise de façon imbriquée au moyen de plusieurs cadres de temps (fr) à l'intérieur de la voie de transmission (P-CCPCH) physique conjointement utilisée.

6. Procédé selon une revendication précédente, dans lequel au moins une autre voie logique (PCH) est transmise dans la voie de transmission (P-CCPCH) physique utilisée conjointement.

7. Procédé selon une revendication précédente, dans lequel la voie logique (BCH) est émise dans un certain nombre de cadres de temps (fr) à l'intérieur d'un supercadre constitué de plusieurs cadres de temps (fr).

8. Procédé selon la revendication précédente, dans lequel une position du cadre de temps (fr) concerné à l'intérieur des cadres de temps (fr) imbriqués pour la voie logique (BCH) est définie par la relation de phases.

9. Procédé selon l'une quelconque des revendications 1 à 7, dans lequel une position du début des cadres de temps (fr) imbriqués à l'intérieur d'un supercadre est signalée par la relation de phases.

10. Procédé selon la revendication précédente, dans lequel la position du cadre de temps (fr) concerné à l'intérieur des cadres de temps (fr) imbriqués pour la voie logique (BCH) est définie par une relation de phases différentielle.

11. Procédé selon l'une quelconque des revendications 1 à 7, dans lequel la position du cadre de temps (fr) concerné à l'intérieur des cadres de temps (fr) imbriqués pour la voie logique (BCH) et la position du début des cadres de temps (fr) imbriqués à l'intérieur d'un supercadre sont définies par une configuration respective de plusieurs relations de phases.

12. Procédé selon une revendication précédente, l'interface radio du système de radiocommunication étant organisée selon un procédé duplex temporel.

13. Système de station de base (BSS) d'un système de radiocommunication, présentant des moyens pour l'émission de canaux logiques (BCH) dans une voie de transmission (P-CCPCH) physique utilisée conjointement par au moins deux systèmes de radiocommunication, la voie logique (BCH) respective pouvant être différenciée au moyen d'une relation de phases individuelle entre la voie logique (BCH) et une autre voie de transmission (pilote).

14. Station d'abonné (UE) d'un système de radiocommunication, présentant des moyens pour la réception de voies logiques (BCH) dans une voie de transmission (P-CCPCH) physique utilisée conjointement par au moins deux systèmes de radiocommunication, la voie logique (BCH) concernée pouvant être différenciée au moyen d'une relation de phases entre la voie logique (BCH) et une autre voie de transmission (pilote).
